Europäisches Patentamt

European Patent Office

Office européen des brevets

(19)

(11) Publication number: **0 053 995**
**B1**

(12) **EUROPEAN PATENT SPECIFICATION**

(45) Date of publication of patent specification: **16.04.86**

(21) Application number: **81630078.4**

(22) Date of filing: **19.11.81**

(51) Int. Cl.⁴: **C 08 L 23/04,** C 08 J 5/18,
C 08 J 3/00

(54) Film Composition.

(30) Priority: **08.12.80 US 213806**

(43) Date of publication of application:
**16.06.82 Bulletin 82/24**

(45) Publication of the grant of the patent:
**16.04.86 Bulletin 86/16**

(84) Designated Contracting States:
**DE FR GB**

(56) References cited:
**EP-A-0 006 110**
**US-A-3 988 395**

(73) Proprietor: **THE GOODYEAR TIRE & RUBBER COMPANY**
**1144 East Market Street**
**Akron, Ohio 44316 (US)**

(72) Inventor: **Phillips, Martin Alexander, Jr.**
**3489 Edgewood Drive**
**Stow Ohio 44224 (US)**

(74) Representative: **Weyland, Joseph Jean Pierre**
**Goodyear International Tire Technical Center**
**Patent Department Avenue Gordon Smith**
**L-7750 Colmar-Berg (LU)**

Courier Press, Leamington Spa, England.

## Description

Technical Field

This invention relates to compositions suitable for forming a film by a bubble extrusion process.

Background Art

Recently linear low density polyethylenes (LLDPE) have become available in pelletized form and they have properties which render them desirable for use in making film by the bubble extrusion process. Unfortunately high clarity, high tack film which is essential to food packaging and pallet wrap films can only be accomplished with such LLDPE resins by chill roll casting or similar techniques which employ chilled rolls or mandrills for rapid cooling of the molten extrudate.

Disclosure and Practice of the Invention

I have discovered how to compound the linear low density polyethylenes containing from 0 to about 15 mol percent of a comonomer of a mono-olefin having 3 to about 12 carbon atoms, hereinafter called a LLDPE of the kind defined, whereby it can be used on blow extrusion film equipment to produce film suitable for such uses as a stretch pallet wrap or as a food contact wrap where high clarity and tack are essential. Also the films produced from my composition have the desired clarity and tack without the need to use special chill rolls.

According to the invention there is provided a blend of

(a) pelletized LLDPE of the kind defined

(b) 0 to about 20 weight percent of pelletized low density polyethylene

(c) 20 to 25 weight percent of powdery LLDPE of the kind defined and

(d) 1 to 15 weight percent of a liquid polyolefin.

Preferably there is 3 to 10 weight percent of the liquid polyolefin.

Preferably the liquid polyolefin has a viscosity of $(0.8 \text{ to } 45) \times 10^{-4}$ m$^2$ s$^{-1}$(80—4500 centistokes) at 100°C and is preferably polybutene.

It is preferable for the powdery LLDPE of the kind defined to have a particle size capable of passing to No. 20 U.S. screen.

Preferably the blend contains 3 to 5 parts per 100 part of a foodstuff surfactant, preferably a glycerol mono fatty acid ester.

Preferably the surfactant contains an ethoxidised nonyl phenol.

The blend according to the invention can be compounded in the conventional manner such as by stirring the ingredients together, viz during extrusion or in a tumbler, but a preferred practice is to premix certain of the ingredients before making the final blend. In the preferred method a Blend A and a Blend B are made and these are blended to give a Blend C that is the feed from the hopper to the screw of said extruder that forces the composition as a tubular film from the die where air blows the film in the normal manner before it is wrapped, preferably after being slit on a mandrel to give a roll of film. Generally Blend A comprises a mixture of (i) a liquid polyolefin, preferably a polybutene, with (ii) a powdery linear low density polyethylene containing from 0 to about 15 mol percent of a comonomer of a mono-olefin having from 3 to 12 carbon atoms such as propylene, butene, amylenes, hexenes, etc. i.e. a LLDPE of the kind defined, with insufficient liquid polyolefin present to render the mass a fluid at atmospheric pressure and a temperature of about 40°C., viz about 1 to 15 weight percent, and preferably 3 to 10 weight percent.

The second component Blend B comprises (i) pelletized linear low density polyethylene of the kind defined and (ii) as much low density polyethylene (LDPE) as possible to give a lower cost extruding composition consistent with obtaining satisfactory clarity and other physical properties, i.e. up to 20 weight percent LDPE.

The linear low density polyethylenes are available commercially as pellets in several grades, viz containing varying amounts of the comonomer such as propylenes, butene, pentene or hexenes as specifically represented by Dowlex ™ 2045 having a melt index (gram/10 minutes) of 1 and a density (gram/cubic centimeter) of 0.920 or Unipel ™ linear low density polyethylenes of about 0.918 to 0.920 density.

The low density polyethylenes are produced by conventional high pressure process, are well known and available from a number of commercial sources. Likewise the liquid polyolefins are available as oils in many grades, as resins under various trade designations such as Wing-Tack™, Piccolite™ resins and Hercolyn™ resins.

## Claims

1. A blend of (a) pelletized linear low density polyethylene containing from 0 to about 15 mol percent of a comonomer of a mono-olefin having 3 to 12 carbon atoms, (b) 0 to about 20 weight percent of a pelletized low density polyethylene, (c) 20 to 25 weight percent of a powdery linear low density polyethylene containing from 0 to about 15 mol percent of a comonomer of a mono-olefin having from 3 to 12 carbon atoms and (d) 1 to 15 weight percent of a liquid polyolefin.

2. The blend of Claim 1, characterized in that there are 3 to 10 weight percent of liquid polyolefin present.

3. The blend of Claim 1 and Claim 2, characterized in that the liquid polyolefin has a viscosity of $(0.8 \text{ to } 45) \times 10^{-4}$ m$^2$ s$^{-1}$ (80—4500 Centistokes) at 100°C.

4. The blend of any one of Claims 1 to 3, characterized in that the blend contains 3 to 5 parts per 100 parts of a food grade surfactant.

5. The blend of Claim 4, characterized in that the surfactant is a glycerol mono fatty acid ester.

6. The blend of Claim 4, characterized in that the surfactant contains an ethoxidized nonyl phenol.

7. The blend of any one of Claims 1 to 6 characterized in that the powdery linear low density polyethylene has a particle size capable of passing a No. 20 U.S. Screen.

8. The blend of any one of Claims 1 to 7 characterized in that the liquid polyolefin is a polybutene.

## Patentansprüche

1. Mischung aus (a) einem pelletisierten linearen Polyethylen mit niedriger Dichte, das 0 bis ungefähr 15 Mol-% eines Comonomeren aus einem Monoolefin mit 3 bis 12 Kohlenstoffatomen enthält, (b) 0 bis ungefähr 20 Gew.-% eines pelletisierten Polyethylens mit niedriger Dichte, (c) 20 bis 25 Gew.-% eines pulverförmigen linearen Polyethylens mit niedriger Dichte, das 0 bis ungefähr 15 Mol-% eines Comonomeren eines Monoolefins mit 3 bis 12 Kohlenstoffatomen enthält, und (d) 1 bis 15 Gew.-% eines flüssigen polyolefins.

2. Mischung nach Anspruch 1, dadurch gekennzeichnet, daß 3 bis 10 Gew.-% des flüssigen polyolefins vorliegen.

3. Mischung nach Anspruch 1 und 2, dadurch gekennzeichnet, daß das flüssige polyolefin eine Viskosität von (0.8 bis 45) × $10^{-4}$ $m^2$ $s^{-1}$ (80 bis 4500 Centistokes) bei 100°C besitzt.

4. Mischung nach einem der Ansprüche 1 bis 3, dadurch gekennzeichnet, daß die Mischung 3 bis 5 Teile pro 100 Teile eines grenzflächenaktiven Mittels mit Nahrungsmittelqualität enthält.

5. Mischung nach Anspruch 4, dadurch gekennzeichnet, daß die grenzflächenaktive Mittel ein Glyzerinmonofettsäureester ist.

6. Mischung nach Anspruch 4, dadurch gekennzeichnet, daß das grenzflächenaktive Mittel ein ethoxidiertes Nonylphenol enthält.

7. Mischung nach einem der Ansprüche 1 bis 6, dadurch gekennzeichnet, daß das pulverförmige lineare Polyethylen mit niedriger Dichte eine Teilchengröße besitzt, daß es durch ein Nr. 20-US-Sieb hindurchgeht.

8. Mischung nach einem der Ansprüche 1 bis 7, dadurch gekennzeichnet, daß das flüssige polyolefin ein Polybuten ist.

## Revendications

1. Mélange comprenant: (a) un polyéthylène linéaire de faible densité en pastilles contenant 0 à environ 15% molaires d'un comonomère d'une mono-oléfine comportant 3 à 12 atomes de carbone, (b) 0 à environ 20% en poids d'un polyéthylène de faible densité en pastilles, (c) 20 à 25% en poids d'un polyéthylène linéaire de faible densité en poudre contenant 0 à environ 15% molaires d'un comonomère d'une mono-oléfine comportant 3 à 12 atomes de carbone et (d) 1 à 15% en poids d'une polyoléfine liquide.

2. Mélange selon la revendication 1, caractérisé par la présence de 3 à 10% en poids d'une polyoléfine liquide.

3. Mélange selon les revendications 1 et 2, caractérisé en ce que la polyoléfine liquide a une viscosité de (0.8 à 45) × $10^{-4}$ $m^2$ $s^{-1}$ (80—4.500 centistokes) à 100°C.

4. Mélange selon l'une quelconque des revendications 1 à 3, caractérisé en ce que, pour 100 parties, il continent 3 à 5 parties d'un agent tensio-actif de qualité pour produits alimentaires.

5. Mélange selon la revendication 4, caractérisé en ce que l'agent tensio-actif est un mono-ester d'acide gras de glycérol.

6. Mélange selon la revendication 4, caractérisé en ce que l'agent tensio-actif contient un nonylphénol éthoxylé.

7. Mélange selon l'une quelconque des revendications 1 à 6, caractérisé en ce que le polyéthylène linéaire de faible densité en poudre est en particules d'une granularité leur permettant de passer à travers un tamis U.S. n° 20.

8. Mélange selon l'une quelconque des revendications 1 à 7, caractérisé en ce que la polyoléfine liquide est un polybutène.